(19) Europäisches Patentamt
European Patent Office
Office européen des brevets

(11) **EP 4 707 723 A1**

(12) **EUROPEAN PATENT APPLICATION**
published in accordance with Art. 153(4) EPC

(43) Date of publication:
**11.03.2026 Bulletin 2026/11**

(21) Application number: **23941550.8**

(22) Date of filing: **14.06.2023**

(51) International Patent Classification (IPC):
***G01B 11/24*** *(2006.01)*   ***G01B 9/02004*** *(2022.01)*
***G01B 9/02055*** *(2022.01)*

(52) Cooperative Patent Classification (CPC):
**G01B 11/0675; G01B 9/02004; G01B 9/02055;
G01B 9/0209; G01B 11/026; G01B 11/24;
G01S 17/34**

(86) International application number:
**PCT/JP2023/021991**

(87) International publication number:
**WO 2024/257243 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **GOTO, Hiroki
Tokyo 100-8310 (JP)**

(74) Representative: **Pfenning, Meinig & Partner mbB
Patent- und Rechtsanwälte
Theresienhöhe 11a
80339 München (DE)**

(54) **DISTANCE MEASUREMENT DEVICE, DISTANCE MEASUREMENT METHOD, AND MACHINING DEVICE**

(57)   A distance measurement device (42) includes: a frequency shift unit (61) to shift a frequency of interference light of light radiated from a sensor head unit (21) to a machining surface (3a) of a target workpiece (3), and light received by the sensor head unit (21) and reflected by the machining surface (3a); a band limitation unit (62) to limit a frequency band of the interference light having the frequency shifted by the frequency shift unit (61); and a signal conversion unit (63) to convert the interference light having the frequency band limited by the band limitation unit (62) into a frequency domain signal. Furthermore, the distance measurement device (42) includes: a shift amount change unit (64) to, when the frequency domain signal converted by the signal conversion unit (63) does not include a signal whose signal strength is a threshold or more, change a shift amount of the frequency of the interference light by the frequency shift amount change unit (61); and a distance calculation unit (65) to, when the frequency domain signal converted by the signal conversion unit (63) includes the signal whose signal strength is the threshold or more, calculate a distance from the sensor head unit (21) to the machining surface (3a) on the basis of the signal whose signal strength is the threshold or more.

FIG. 1

## Description

### TECHNICAL FIELD

The present disclosure relates to a distance measurement device, a distance measurement method, and a machine tool device.

### BACKGROUND ART

There is a distance measurement device that radiates light toward a machining surface of a target workpiece, and then calculates a distance to the machining surface from a sensor head unit that receives the light reflected from the machining surface.

As for such a distance measurement device, for example, Patent Literature 1 discloses a distance measurement device that includes a sensor main body unit connected with a sensor head unit via an optical fiber. The sensor main body unit includes a light interference unit and a distance calculation unit.

The light interference unit detects interference light of light radiated from the sensor head unit and light received by the sensor head unit. The distance calculation unit converts the interference light into a frequency domain signal, and calculates a distance from the sensor head unit to a machining surface of a target workpiece on the basis of the frequency domain signal.

### CITATION LIST

### PATENT LITERATURE

Patent Literature 1: WO 2020-070884 A

### SUMMARY OF INVENTION

### TECHNICAL PROBLEM

In a case where, for example, a general distance measurement device is mounted on a Field-Programmable Gate Array (FPGA), a frequency range (hereinafter, referred to as a "convertible frequency range") of a frequency domain signal into which interference light can be converted may be limited for reduction of a distance measurement time, reduction of a memory capacity, or the like.

A convertible frequency range of the distance measurement device disclosed in Patent Literature 1 may be also limited. Furthermore, as a machining head on which the sensor head unit is mounted moves, an optical fiber that connects the sensor head unit and the sensor head unit may be disconnected. When the optical fiber is disconnected, the disconnected optical fiber needs to be replaced with another optical fiber. When an optical path length of the disconnected optical fiber and an optical path length of the another optical fiber match, the distance calculation unit of the distance measurement device can calculate a distance from the sensor head unit to a machining surface of a target workpiece. However, it is rare that both of the optical path lengths match, and a difference between both of the optical path lengths may cause a situation that the frequency of a frequency domain signal falls outside the convertible frequency range. In such a case, there has been a problem that the distance calculation unit cannot calculate the distance from the sensor head unit to the machining surface of the target workpiece.

The present disclosure has been made to solve the above problem, and an object of the present disclosure is to provide a distance measurement device that, even when the frequency of a frequency domain signal falls outside a convertible frequency range, can calculate a distance from a sensor head unit to a machining surface of a target workpiece.

### SOLUTION TO PROBLEM

A distance measurement device according to the present disclosure includes: a frequency shift unit to shift a frequency of interference light of light radiated from a sensor head unit to a machining surface of a target workpiece, and light received by the sensor head unit and reflected by the machining surface; a band limitation unit to limit a frequency band of the interference light having the frequency shifted by the frequency shift unit; and a signal conversion unit to convert the interference light having the frequency band limited by the band limitation unit into a frequency domain signal. Furthermore, the distance measurement device includes: a shift amount change unit to, when the frequency domain signal converted by the signal conversion unit does not include a signal whose signal strength is a threshold or more, change a shift amount of the frequency of the interference light by the frequency shift amount change unit; and a distance calculation unit to, when the frequency domain signal converted by the signal conversion unit includes the signal whose signal strength is the threshold or more, calculate a distance from the sensor head unit to the machining surface on a basis of the signal whose signal strength is the threshold or more.

ADVANTAGEOUS EFFECTS OF INVENTION

According to the present disclosure, even when a situation occurs that the frequency of a frequency domain signal falls outside a convertible frequency range, it is possible to calculate a distance from a sensor head unit to a machining surface of a target workpiece.

BRIEF DESCRIPTION OF DRAWINGS

FIG. 1 is a configuration diagram illustrating a machine tool device 1 according to Embodiment 1.
FIG. 2 is a configuration diagram illustrating a sensor unit 20 of the machine tool device according to Embodiment 1.
FIG. 3 is an explanatory view illustrating a time waveform of frequency-swept light.
FIG. 4 is a configuration diagram illustrating a distance measurement device 42 according to Embodiment 1.
FIG. 5 is a hardware configuration diagram illustrating hardware of the distance measurement device 42 according to Embodiment 1.
FIG. 6 is a hardware configuration diagram of a computer in a case where the distance measurement device 42 is implemented by software, firmware, or the like.
FIG. 7 is a flowchart illustrating a distance measurement method that is a processing procedure of the distance measurement device 42.
FIG. 8 is an explanatory view illustrating that a reflection light spectrum that is a peak signal is included a convertible frequency band.
FIG. 9 is an explanatory view illustrating an example of a reference workpiece.
FIG. 10 is an explanatory view illustrating that a frequency shift amount is changed and, as a result, the reflection light spectrum is included in the convertible frequency band.
FIG. 11 is a configuration diagram illustrating a machine tool device according to Embodiment 2.
FIG. 12 is a configuration diagram illustrating the sensor unit 20 of the machine tool device according to Embodiment 2.
FIG. 13 is an explanatory view illustrating an example of a reference workpiece having a machining surface 3a to which oil adheres.
FIG. 14 is an explanatory view illustrating two peak signals output from a shift amount change unit 64.

DESCRIPTION OF EMBODIMENTS

Hereinafter, a mode for carrying out the present disclosure will be described with reference to the accompanying drawings to describe the present disclosure in more detail.

Embodiment 1.

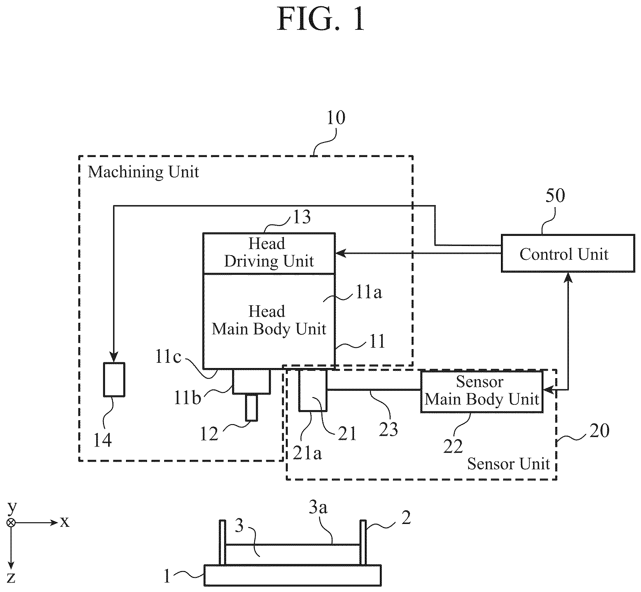

FIG. 1 is a configuration diagram illustrating a machine tool device according to Embodiment 1.
The machine tool device illustrated in FIG. 1 includes a table 1, a vise 2, a machining unit 10, a sensor unit 20, and a control unit 50.
The table 1 is a base on which a target workpiece 3 of a machining target is placed.
The vise 2 is a fixture that fixes the target workpiece 3 in such a way that the target workpiece 3 does not move when machining the target workpiece 3.
The target workpiece 3 corresponds to a metal or the like whose machining surface 3a is machined by the machining unit 10.
The machining unit 10 includes a machining head 11, a machining tool 12, a head driving unit 13, and a cutting oil nozzle 14.
The machining unit 10 supplies a cutting oil to the machining surface 3a of the target workpiece 3, and performs machining on the machining surface 3a of the target workpiece 3.
The machining head 11 includes a head main body unit 11a and a spindle 11b.
The head main body unit 11a is a metal structure that supports each of the spindle 11b and a sensor head unit 21.
The spindle 11b includes an unillustrated built-in chuck device that detachably holds the machining tool 12.
The spindle 11b is a metal shaft-shaped part that is driven to rotate in a state where the spindle 11b holds the machining tool 12.

An outer circumferential surface 11c is an outer circumferential surface that faces the table 1 among a plurality of outer circumferential surfaces of the head main body unit 11a.

The machining tool 12 is a metal machining cutter such as a milling cutter, an end mill, a drill, or a tap.

The machining tool 12 cuts and machines the machining surface 3a of the target workpiece 3 by a rotating operation.

The head driving unit 13 is a driving mechanism that relatively changes a position of the head main body unit 11a with respect to the machining surface 3a in accordance with a control signal output from the control unit 50.

Directions to change the position of the head main body unit 11a by the head driving unit 13 are an x axis direction, a y axis direction, and a z axis direction illustrated in FIG. 1.

The cutting oil nozzle 14 is a nozzle that applies a cutting oil to the machining surface 3a of the target workpiece 3 when receiving a cutting oil supply command from the control unit 50.

The sensor unit 20 includes the sensor head unit 21, a sensor main body unit 22, and a light transmission unit 23.

The sensor unit 20 calculates a distance from a distal end 21a of the sensor head unit 21 to the machining surface 3a of the target workpiece 3.

The sensor head unit 21 is attached to an outer circumferential surface 11c of the head main body unit 11a.

The sensor head unit 21 radiates irradiation light output from the sensor main body unit 22 toward the machining surface 3a, and receives reflection light that is the irradiation light reflected by the machining surface 3a.

The sensor head unit 21 outputs the reflection light to the sensor main body unit 22 via the light transmission unit 23.

Here, the sensor head unit 21 radiates the irradiation light toward the machining surface 3a, and receives the reflection light that is the irradiation light reflected by the machining surface 3a. However, this is merely an example, and the sensor head unit 21 may radiate light toward a surface of a reference workpiece that is the machining surface 3a of the target workpiece 3, and receive the reflection light that is the irradiation light reflected by the surface of the reference workpiece.

The reference workpiece is, for example, a metal having a desired shape after machining of the target workpiece 3.

The sensor main body unit 22 outputs the irradiation light to the sensor head unit 21 via the light transmission unit 23.

The sensor main body unit 22 acquires the reflection light from the sensor head unit 21 via the light transmission unit 23.

The sensor main body unit 22 detects interference light of the irradiation light and the reflection light, and calculates a distance from the distal end 21a of the sensor head unit 21 to the machining surface 3a on the basis of the interference light.

The sensor main body unit 22 outputs to the control unit 50 the distance from the distal end 21a of the sensor head unit 21 to the machining surface 3a.

The light transmission unit 23 is implemented as, for example, an optical fiber.

The light transmission unit 23 is a transmission path for light that travels from the sensor main body unit 22 to the sensor head unit 21, and light that travels from the sensor head unit 21 to the sensor main body unit 22.

The machine tool device illustrated in FIG. 1 is provided with the light transmission unit 23. However, this is merely an example, and the machine tool device may not be provided with the light transmission unit 23. In this case, transmission of light between the sensor head unit 21 and the sensor main body unit 22 is performed through space.

The control unit 50 outputs to the head driving unit 13 a control signal indicating a movement position of the head main body unit 11a, and outputs a cutting oil supply command to the cutting oil nozzle 14.

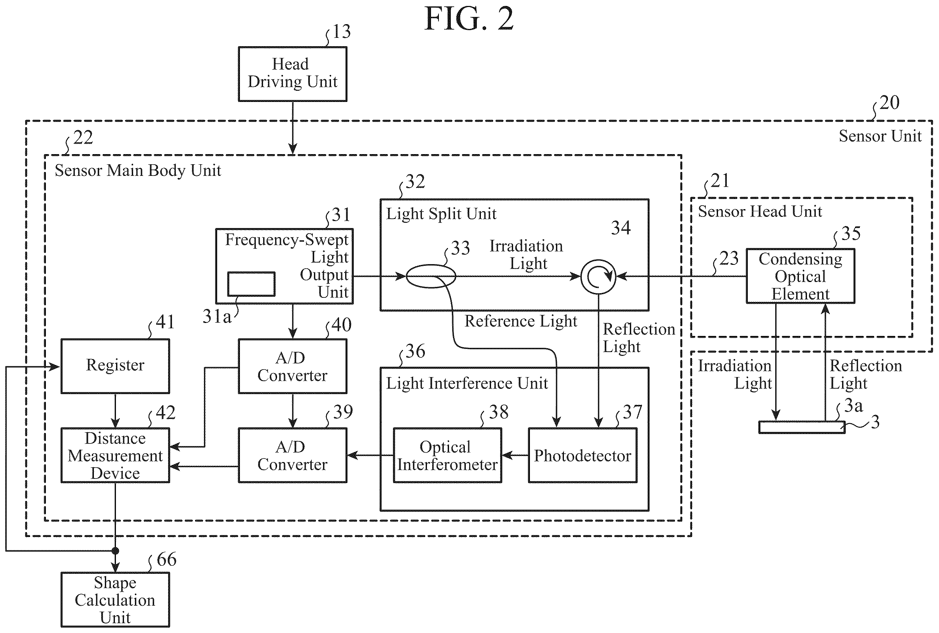

FIG. 2 is a configuration diagram illustrating the sensor unit 20 of the machine tool device according to Embodiment 1.

The sensor unit 20 includes the sensor head unit 21, the sensor main body unit 22, and the light transmission unit 23, and the sensor head unit 21 includes a condensing optical element 35. The sensor main body unit 22 includes a frequency-swept light output unit 31, a light split unit 32, a light interference unit 36, an analog-to-digital converter (hereinafter, referred to as an "A/D converter") 39, an A/D converter 40, a register 41, and a distance measurement device 42.

The frequency-swept light output unit 31 includes a frequency-swept light source 31a that outputs frequency-swept light whose frequency changes as the time passes. The frequency-swept light output unit 31 outputs the frequency-swept light to the light split unit 32.

The frequency-swept light output unit 31 outputs to the A/D converter 40 a trigger signal indicating a timing at which the frequency-swept light has been output, or an amplitude signal indicating the amplitude of the frequency-swept light.

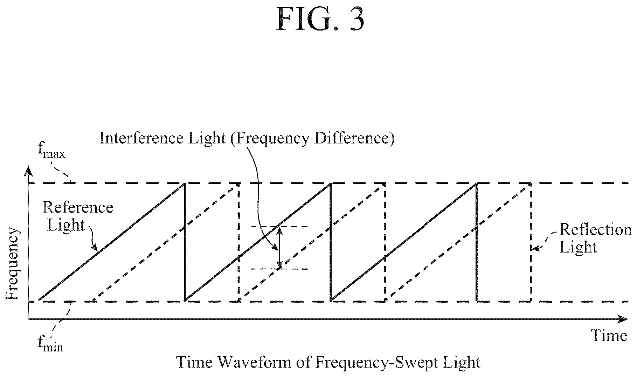

FIG. 3 is an explanatory view illustrating a time waveform of frequency-swept light.

Frequency-swept light is light whose frequency changes from a minimum frequency $f_{min}$ to a maximum frequency $f_{max}$ as the time passes. When the frequency of the frequency-swept light reaches the maximum frequency $f_{max}$, the frequency returns to the minimum frequency $f_{min}$ once, and then the frequency changes from the minimum frequency $f_{min}$ to the maximum frequency $f_{max}$ again. The frequency-swept light may be also called chirp signal light.

In FIG. 3, the horizontal axis indicates a time, and the vertical axis indicates a frequency. The solid line indicates reference light, and the broken line indicates reflection light.

The interference light is light having a frequency that is a difference between the frequency of the reference light and the frequency of the reflection light.

The light split unit 32 includes an optical coupler 33 and a circulator 34.

The optical coupler 33 is a light splitting element that splits the frequency-swept light output from the frequency-swept light output unit 31 into reference light and irradiation light.

The optical coupler 33 outputs the reference light to an optical interferometer 37, and outputs the irradiation light to the circulator 34.

The circulator 34 outputs the irradiation light output from the optical coupler 33, to the condensing optical element 35 of the sensor head unit 21 via the light transmission unit 23.

The circulator 34 outputs to the optical interferometer 37 the reflection light output from the condensing optical element 35.

The condensing optical element 35 condenses on the machining surface 3a the irradiation light output from the circulator 34.

More specifically, the condensing optical element 35 includes two aspherical lenses. The aspherical lens on the circulator 34 side among the two aspherical lenses converts the irradiation light output from the circulator 34 into parallel light. The aspherical lens on the machining surface 3a side condenses the parallel light on the machining surface 3a.

Furthermore, the condensing optical element 35 receives reflection light that is the irradiation light reflected by the machining surface 3a, and outputs the reflection light to the circulator 34 via the light transmission unit 23.

The light interference unit 36 includes the optical interferometer 37 and a photodetector 38.

The light interference unit 36 generates interference light of the reference light and the reflection light output from the light split unit 32.

The light interference unit 36 converts the interference light into an electrical signal, and outputs the electrical signal to the A/D converter 39.

The optical interferometer 37 generates the interference light of the reference light output from the optical coupler 33 and the reflection light output from the circulator 34, and outputs the interference light to the photodetector 38.

The photodetector 38 detects the interference light output from the optical interferometer 37, and converts the interference light into the electrical signal.

The photodetector 38 outputs the electrical signal to the A/D converter 39.

The A/D converter 39 converts the electrical signal output from the photodetector 38 from an analog signal to a digital signal, and outputs the digital signal to the distance measurement device 42.

The A/D converter 40 acquires from the frequency-swept light output unit 31 the trigger signal indicating the timing at which the frequency-swept light has been output, or the amplitude signal indicating the amplitude of the frequency-swept light.

The A/D converter 40 converts the trigger signal or the amplitude signal from an analog signal to a digital signal, and outputs the digital signal to the distance measurement device 42.

The register 41 is, for example, a recording medium in which a frequency shift amount and a cutting oil refractive index are recorded.

The frequency shift amount is recorded in the register 41 per focal position of light radiated from the sensor head unit 21 to the machining surface 3a.

Note that the frequency shift amount takes a value determined on the basis of an optical path length of the optical fiber that implements the light transmission unit 23.

The cutting oil refractive index takes a value determined on the basis of a type of a cutting oil supplied from the cutting oil nozzle 14 to the machining surface 3a, the concentration of the cutting oil, or a surrounding environmental temperature of the machine tool device.

The distance measurement device 42 is a device that calculates a distance from the distal end 21a of the sensor head unit 21 to the machining surface 3a of the target workpiece 3.

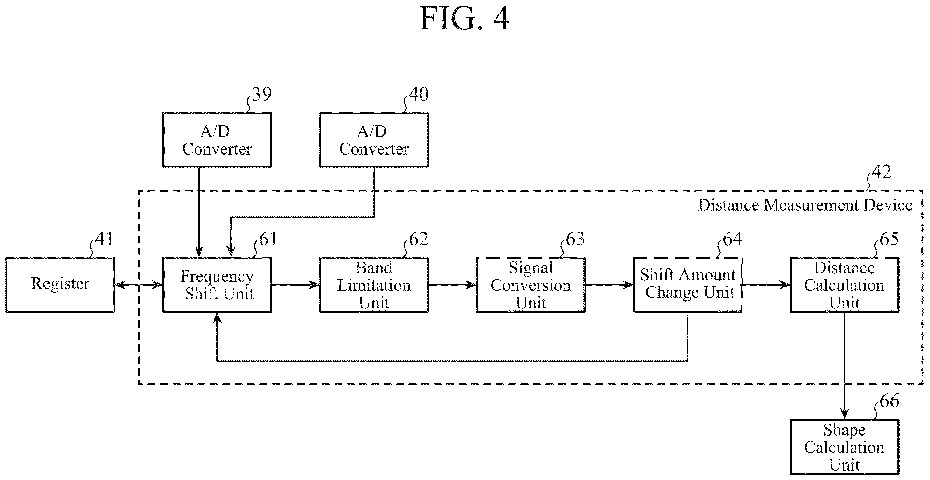

FIG. 4 is a configuration diagram illustrating the distance measurement device 42 according to Embodiment 1.

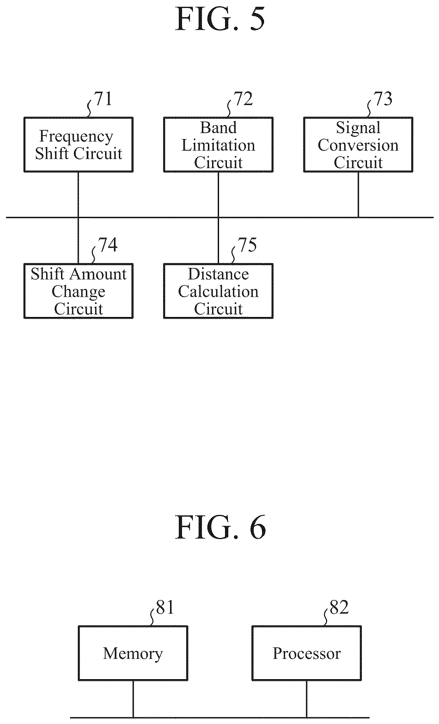

FIG. 5 is a hardware configuration diagram illustrating hardware of the distance measurement device 42 according to Embodiment 1.

The distance measurement device 42 includes a frequency shift unit 61, a band limitation unit 62, a signal conversion unit 63, a shift amount change unit 64, and a distance calculation unit 65.

The frequency shift unit 61 is implemented by, for example, a frequency shift circuit 71 illustrated in FIG. 5.

The frequency shift unit 61 acquires from the A/D converter 39 a digital signal related to interference light (hereinafter, referred to as "interference light data"), and acquires from the A/D converter 40 a digital signal related to a trigger signal (hereinafter, referred to as "trigger data") or a digital signal related to an amplitude signal (hereinafter, referred to as "amplitude data").

By, for example, acquiring interference light data after acquiring trigger data, the frequency shift unit 61 shifts the frequency of the interference light data by the frequency shift amount recorded in the register 41.

The frequency shift unit 61 outputs the interference light data after frequency shift to the band limitation unit 62.

The band limitation unit 62 is implemented by, for example, a band limitation circuit 72 illustrated in FIG. 5.

The band limitation unit 62 includes, for example, a low-pass filter, a band pass filter, or a high-pass filter.

The band limitation unit 62 acquires the interference light data after the frequency shift from the frequency shift unit 61.

The band limitation unit 62 limits a frequency band of the interference light data after the frequency shift.

The band limitation unit 62 outputs the interference light data after frequency band limitation to the signal conversion unit 63.

The signal conversion unit 63 is implemented by, for example, a signal conversion circuit 73 illustrated in FIG. 5.

The signal conversion unit 63 acquires the interference light data after the frequency band limitation from the band limitation unit 62.

The signal conversion unit 63 converts the interference light data into a frequency domain signal by, for example, performing Fast Fourier Transformation (FFT) on the interference light data after the frequency band limitation.

The signal conversion unit 63 outputs the frequency domain signal to the shift amount change unit 64.

The shift amount change unit 64 is implemented by, for example, a shift amount change circuit 74 illustrated in FIG. 5.

The shift amount change unit 64 acquires the frequency domain signal from the signal conversion unit 63.

The shift amount change unit 64 changes a frequency shift amount of the frequency shift unit 61 when the frequency domain signal does not include a signal (hereinafter, referred to as a "peak signal") whose signal strength is a threshold or more.

The shift amount change unit 64 outputs the peak signal to the distance calculation unit 65 when the frequency domain signal includes the peak signal.

The distance calculation unit 65 is implemented by, for example, a distance calculation circuit 75 illustrated in FIG. 5.

When the shift amount change unit 64 outputs the peak signal since the frequency domain signal includes the peak signal, the distance calculation unit 65 calculates a distance from the distal end 21a of the sensor head unit 21 to the machining surface 3a on the basis of the peak signal.

The distance calculation unit 65 outputs the calculated distance to a shape calculation unit 66.

The shape calculation unit 66 is built in, for example, the control unit 50.

The shape calculation unit 66 acquires the distance calculated by the distance calculation unit 65 every time the position of the sensor head unit 21 is moved.

The shape calculation unit 66 calculates the shape of the target workpiece 3 on the basis of a plurality of distances.

Here, the shape calculation unit 66 is built in the control unit 50. However, this is merely an example, and the shape calculation unit 66 may be built in, for example, the distance measurement device 42.

In FIG. 4, it is assumed that each of the frequency shift unit 61, the band limitation unit 62, the signal conversion unit 63, the shift amount change unit 64, and the distance calculation unit 65 that are the components of the distance measurement device 42 is implemented by dedicated hardware illustrated in FIG. 5. That is, in FIG. 4, it is assumed that the distance measurement device 42 is implemented by the frequency shift circuit 71, the band limitation circuit 72, the signal conversion circuit 73, the shift amount change circuit 74, and the distance calculation circuit 75.

Each of the frequency shift circuit 71, the band limitation circuit 72, the signal conversion circuit 73, the shift amount change circuit 74, and the distance calculation circuit 75 corresponds to, for example, a single circuit, a composite circuit, a programmed processor, a parallel-programmed processor, an Application Specific Integrated Circuit (ASIC), a Field-Programmable Gate Array (FPGA), or a combination thereof.

The components of the distance measurement device 42 are not limited to components that are implemented by the dedicated hardware, and the distance measurement device 42 may be implemented by software, firmware, or a combination of software and firmware.

The software or the firmware is stored as programs in a memory of a computer. The computer means hardware that executes the programs, and may correspond to, for example, a Central Processing Unit (CPU), a Graphics Processing Unit (GPU), a center processing device, a processing device, an arithmetic operation device, a microprocessor, a microcomputer, a processor, or a Digital Signal Processor (DSP).

FIG. 6 is a hardware configuration diagram of a computer in a case where the distance measurement device 42 is implemented by software, firmware, or the like.

In a case where the distance measurement device 42 is implemented by the software, the firmware, or the like, programs for causing the computer to execute processing procedures in the frequency shift unit 61, the band limitation unit 62, the signal conversion unit 63, the shift amount change unit 64, and the distance calculation unit 65 are stored in a memory 81. Furthermore, a processor 82 of the computer executes the programs stored in the memory 81.

Furthermore, FIG. 5 illustrates an example where each of the components of the distance measurement device 42 is implemented by dedicated hardware, and FIG. 6 illustrates an example where the distance measurement device 42 is implemented by the software, the firmware, or the like. However, this is merely an example, and part of the components of the distance measurement device 42 may be implemented by the dedicated hardware, and the rest of the components may be implemented by the software, the firmware, or the like.

Next, the operation of the machine tool device illustrated in FIG. 1 will be described.

First, an operation of the machine tool device of calculating the shape of the target workpiece 3 when the optical fiber that implements the light transmission unit 23 is not disconnected will be described.

The machine tool device illustrated in FIG. 1 assumes that the target workpiece 3 is an object that has already been machined by the machine tool device. However, this is merely an example, and the target workpiece 3 may be an object that is not yet machined by the machine tool device or may be an object that is being machined.

The control unit 50 outputs to the head driving unit 13 a control signal indicating a movement position of the head main body unit 11a.

Here, for simplicity of description, the control unit 50 does not output a cutting oil supply command to the cutting oil nozzle 14.

The head driving unit 13 relatively changes a position of the head main body unit 11a with respect to the machining surface 3a in accordance with the control signal output from the control unit 50.

The frequency-swept light output unit 31 outputs, for example, the frequency-swept light illustrated in FIG. 3 to the light split unit 32 as frequency-swept light whose frequency changes as the time passes every time the position of the head main body unit 11a with respect to the machining surface 3a changes.

Furthermore, the frequency-swept light output unit 31 outputs to the A/D converter 40 a trigger signal indicating a timing at which the frequency-swept light has been output, or an amplitude signal indicating the amplitude of the frequency-swept light.

The optical coupler 33 acquires the frequency-swept light from the frequency-swept light output unit 31.

The optical coupler 33 splits the frequency-swept light into reference light and irradiation light.

The optical coupler 33 outputs the reference light to the optical interferometer 37, and outputs the irradiation light to the circulator 34.

The circulator 34 outputs the irradiation light output from the optical coupler 33, to the condensing optical element 35 via the light transmission unit 23.

The condensing optical element 35 condenses on the machining surface 3a the irradiation light output from the circulator 34.

Furthermore, the condensing optical element 35 receives reflection light that is the irradiation light reflected by the machining surface 3a, and outputs the reflection light to the circulator 34 via the light transmission unit 23.

The circulator 34 outputs to the optical interferometer 37 the reflection light output from the condensing optical element 35.

The optical interferometer 37 acquires the reference light from the optical coupler 33, and acquires the reflection light from the circulator 34.

As illustrated in FIG. 3, the optical interferometer 37 generates light having a frequency difference between the frequency of the reference light and the frequency of the reflection light as the interference light of the reference light and the reflection light.

The optical interferometer 37 outputs the interference light to the photodetector 38.

The photodetector 38 detects the interference light output from the optical interferometer 37, and converts the interference light into an electrical signal.

The photodetector 38 outputs the electrical signal to the A/D converter 39.

The A/D converter 39 acquires the electrical signal indicating the interference light from the photodetector 38.

The A/D converter 39 converts the electrical signal indicating the interference light from an analog signal to a digital signal, and outputs the digital signal to the distance measurement device 42.

The A/D converter 40 acquires from the frequency-swept light output unit 31 the trigger signal indicating the timing at which the frequency-swept light has been output, or the amplitude signal indicating the amplitude of the frequency-swept light.

When acquiring the trigger signal, the A/D converter 40 converts the trigger signal from an analog signal to a digital signal, and outputs the digital signal to the distance measurement device 42.

When acquiring the amplitude signal, the A/D converter 40 converts the amplitude signal from an analog signal to a digital signal, and outputs the digital signal to the distance measurement device 42.

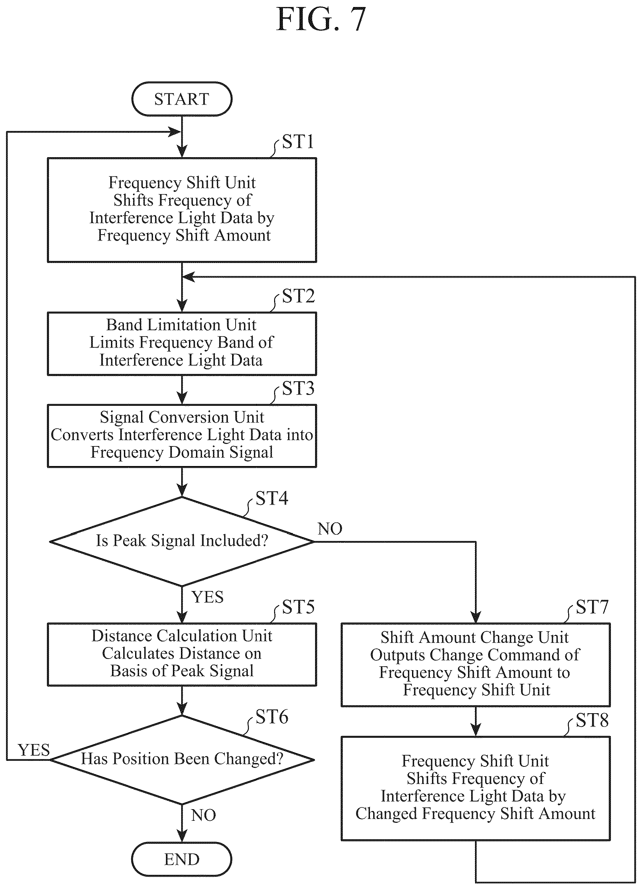

FIG. 7 is a flowchart illustrating a distance measurement method that is a processing procedure of the distance measurement device 42.

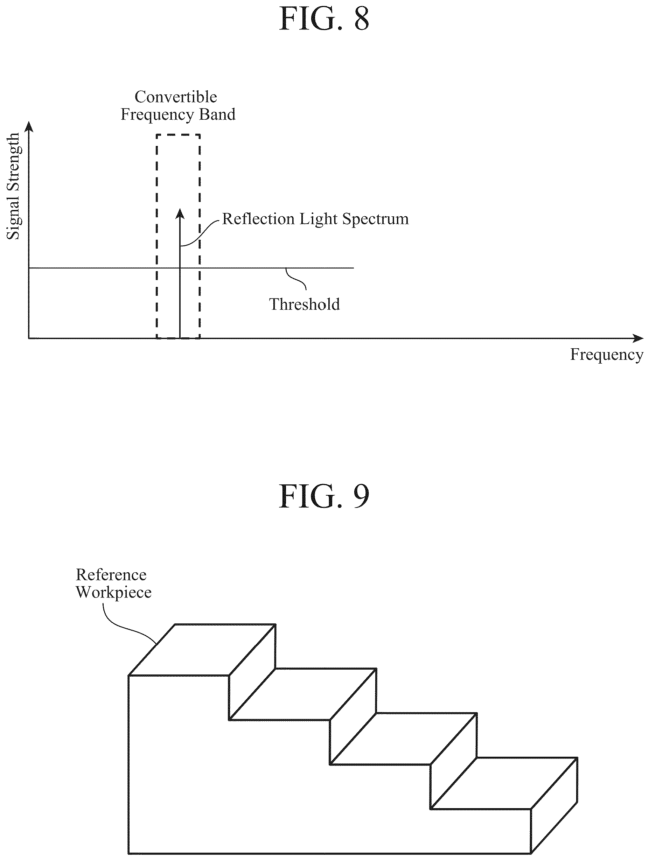

A frequency shift amount matching the optical path length of the light transmission unit 23 that is not disconnected is recorded in the register 41. This frequency shift amount is a frequency shift amount of the shift amount change unit 64 for shifting the frequency of interference light data in such a way that a peak signal that is a signal whose signal strength is the threshold or more among frequency domain signals related to the interference light data after frequency band limitation by the band limitation unit 62 is included in a frequency band in which the peak signal can be detected. That is, such a frequency shift amount that a reflection light spectrum that is the peak signal is included in a convertible frequency band as illustrated in FIG. 8 is recorded in the register 41. The convertible frequency band is a frequency band limited by the band limitation unit 62.

FIG. 8 is an explanatory view illustrating that the reflection light spectrum that is the peak signal is included in the convertible frequency band.

In FIG. 8, the horizontal axis indicates a frequency, and the vertical axis indicates a signal strength.

The frequency shift unit 61 acquires from the register 41 a frequency shift amount corresponding to a focal position of light radiated from the sensor head unit 21 to the machining surface 3a.

The frequency shift unit 61 acquires from the A/D converter 39 interference light data that is the digital signal related to the interference light, and acquires from the A/D converter 40 trigger data that is the digital signal related to the trigger signal or amplitude data that is the digital signal related to the amplitude signal.

By acquiring the interference light data after acquiring the trigger data, the frequency shift unit 61 shifts the frequency of the interference light data by the frequency shift amount (step ST1 in FIG. 7).

When acquiring the amplitude data, the frequency shift unit 61 detects a timing at which the frequency of the frequency-swept light has returned to the minimum frequency $f_{min}$ on the basis of the amplitude of the frequency-swept light indicated by the amplitude data.

By acquiring the interference light data after detecting the timing at which the frequency of the frequency-swept light has returned to the minimum frequency $f_{min}$, the frequency shift unit 61 shifts the frequency of the interference light data by the frequency shift amount (step ST1 in FIG. 7).

The frequency shift unit 61 outputs the interference light data after frequency shift to the band limitation unit 62.

The band limitation unit 62 acquires the interference light data after the frequency shift from the frequency shift unit 61.

The band limitation unit 62 limits a frequency band of the interference light data after the frequency shift (step ST2 in FIG. 7).

The frequency band limited by the band limitation unit 62 corresponds to the convertible frequency band illustrated in FIG. 8.

The band limitation unit 62 outputs the interference light data after the frequency band limitation to the signal conversion unit 63.

The signal conversion unit 63 acquires the interference light data after the frequency band limitation from the band limitation unit 62.

The signal conversion unit 63 converts the interference light data into the frequency domain signal by, for example, performing FFT on the interference light data after the frequency band limitation (step ST3 in FIG. 7).

The signal conversion unit 63 outputs the frequency domain signal to the shift amount change unit 64.

The shift amount change unit 64 acquires the frequency domain signal from the signal conversion unit 63.

The shift amount change unit 64 determines whether or not the frequency domain signal includes a peak signal that is a signal whose signal strength is the threshold or more.

In a state where the light transmission unit 23 is not disconnected, the frequency shift unit 61 shifts the frequency of the interference light data by the frequency shift amount recorded in the register 41. Hence, as illustrated in FIG. 8, the peak signal is included in the convertible frequency band. Accordingly, the frequency domain signal includes the peak signal in a state where the light transmission unit 23 is not disconnected.

In a case where the frequency domain signal includes the peak signal (step ST4 in FIG. 7: a case of YES), the shift amount change unit 64 outputs the peak signal to the distance calculation unit 65.

When the shift amount change unit 64 outputs the peak signal, the distance calculation unit 65 calculates a distance from the distal end 21a of the sensor head unit 21 to the machining surface 3a on the basis of the peak signal (step ST5 in FIG. 7). It is possible to calculate the distance from the distal end 21a of the sensor head unit 21 to the machining surface 3a from the frequency of the peak signal. Processing of calculating the distance from the frequency of the peak signal is a known technique, detailed description thereof will be omitted.

The distance calculation unit 65 outputs the calculated distance to the shape calculation unit 66.

When the control unit 50 outputs the control signal indicating the movement position of the head main body unit 11a to the head driving unit 13, and then the position of the head main body unit 11a is changed (step ST6 in FIG. 7: a case of YES), processing in step ST1 to ST5 is repeated.

When calculation of the distance is finished, and the position of the head main body unit 11a is not changed (step ST6 in FIG. 7: in a case of NO), the machine tool device finishes a series of processing.

The shape calculation unit 66 acquires the distance calculated by the distance calculation unit 65 every time the position of the sensor head unit 21 is moved.

The shape calculation unit 66 calculates the shape of the target workpiece 3 on the basis of a plurality of distances. Since processing of calculating the shape of the target workpiece 3 on the basis of the plurality of distances is a known technique, detailed description thereof will be omitted.

Next, an operation of the machine tool device at a time when the optical fiber that implements the light transmission unit 23 is disconnected and is replaced with another optical fiber will be described.

In this case, instead of the target workpiece 3, the reference workpiece is placed on the table 1.

FIG. 9 is an explanatory view illustrating an example of the reference workpiece.

The control unit 50 outputs to the head driving unit 13 the control signal indicating the movement position of the head main body unit 11a.

The head driving unit 13 relatively changes the position of the head main body unit 11a with respect to the machining surface 3a in accordance with the control signal output from the control unit 50.

The frequency-swept light output unit 31 outputs, for example, the frequency-swept light illustrated in FIG. 3 to the light split unit 32 as frequency-swept light whose frequency changes as the time passes every time the position of the head main body unit 11a with respect to the machining surface 3a changes.

Furthermore, the frequency-swept light output unit 31 outputs to the A/D converter 40 a trigger signal indicating a timing at which the frequency-swept light has been output, or an amplitude signal indicating the amplitude of the frequency-swept light.

The optical coupler 33 acquires the frequency-swept light from the frequency-swept light output unit 31.

The optical coupler 33 splits the frequency-swept light into reference light and irradiation light.

The optical coupler 33 outputs the reference light to the optical interferometer 37, and outputs the irradiation light to the circulator 34.

The circulator 34 outputs the irradiation light output from the optical coupler 33, to the condensing optical element 35 via the light transmission unit 23.

The condensing optical element 35 condenses on the machining surface 3a the irradiation light output from the circulator 34.

Furthermore, the condensing optical element 35 receives reflection light that is the irradiation light reflected by the machining surface 3a, and outputs the reflection light to the circulator 34 via the light transmission unit 23.

The circulator 34 outputs to the optical interferometer 37 the reflection light output from the condensing optical element 35.

The optical interferometer 37 acquires the reference light from the optical coupler 33, and acquires the reflection light from the circulator 34.

As illustrated in FIG. 3, the optical interferometer 37 generates light having a frequency difference between the frequency of the reference light and the frequency of the reflection light as the interference light of the reference light and the reflection light.

The optical interferometer 37 outputs the interference light to the photodetector 38.

The photodetector 38 detects the interference light output from the optical interferometer 37, and converts the interference light into the electrical signal.

The photodetector 38 outputs the electrical signal to the A/D converter 39.

The A/D converter 39 acquires the electrical signal indicating the interference light from the photodetector 38.

The A/D converter 39 converts the electrical signal indicating the interference light from an analog signal to a digital signal, and outputs the digital signal to the distance measurement device 42.

The A/D converter 40 acquires from the frequency-swept light output unit 31 the trigger signal indicating the timing at which the frequency-swept light has been output, or the amplitude signal indicating the amplitude of the frequency-swept light.

When acquiring the trigger signal, the A/D converter 40 converts the trigger signal from an analog signal to a digital signal, and outputs the digital signal to the distance measurement device 42.

When acquiring the amplitude signal, the A/D converter 40 converts the amplitude signal from an analog signal to a digital signal, and outputs the digital signal to the distance measurement device 42.

The frequency shift unit 61 of the distance measurement device 42 acquires from the register 41 a frequency shift amount corresponding to a focal position of light radiated from the sensor head unit 21 to the machining surface 3a.

The frequency shift unit 61 acquires from the A/D converter 39 interference light data that is the digital signal related to the interference light, and acquires from the A/D converter 40 trigger data that is the digital signal related to the trigger signal or amplitude data that is the digital signal related to the amplitude signal.

By acquiring the interference light data after acquiring the trigger data, the frequency shift unit 61 shifts the frequency of the interference light data by the frequency shift amount (step ST1 in FIG. 7).

When acquiring the amplitude data, the frequency shift unit 61 detects a timing at which the frequency of the frequency-swept light has returned to the minimum frequency $f_{min}$ on the basis of the amplitude of the frequency-swept light indicated by the amplitude data.

By acquiring the interference light data after detecting the timing at which the frequency of the frequency-swept light has returned to the minimum frequency $f_{min}$, the frequency shift unit 61 shifts the frequency of the interference light data by the frequency shift amount (step ST1 in FIG. 7).

The frequency shift unit 61 outputs the interference light data after frequency shift to the band limitation unit 62.

The band limitation unit 62 acquires the interference light data after the frequency shift from the frequency shift unit 61.

The band limitation unit 62 limits a frequency band of the interference light data after the frequency shift (step ST2 in FIG. 7).

The band limitation unit 62 outputs the interference light data after frequency band limitation to the signal conversion unit 63.

The signal conversion unit 63 acquires the interference light data after the frequency band limitation from the band limitation unit 62.

The signal conversion unit 63 converts the interference light data into the frequency domain signal by, for example, performing FFT on the interference light data after the frequency band limitation (step ST3 in FIG. 7).

The signal conversion unit 63 outputs the frequency domain signal to the shift amount change unit 64.

The shift amount change unit 64 acquires the frequency domain signal from the signal conversion unit 63.

The shift amount change unit 64 determines whether or not the frequency domain signal includes a peak signal that is a signal whose signal strength is the threshold or more.

A frequency shift amount recorded in the register 41 is a shift amount matching the light transmission unit 23 that is not disconnected. Hence, when a difference between the optical path length of the disconnected light transmission unit 23 and an optical path length of another optical fiber that has been replaced is great, the peak signal may not be included in the convertible frequency band. Accordingly, when the disconnected light transmission unit 23 is replaced with the other light transmission unit 23, the frequency domain signal may not include a peak signal.

In a case where the frequency domain signal does not include the peak signal (step ST4 in FIG. 7: a case of NO), the shift amount change unit 64 outputs a change command of the frequency shift amount to the frequency shift unit 61 (step ST7 in FIG. 7).

When receiving the change command of the frequency shift amount from the shift amount change unit 64, the frequency shift unit 61 changes the frequency shift amount, and shifts the frequency of the interference light data by the changed frequency shift amount (step ST8 in FIG. 7). The changed frequency shift amount is a frequency shift amount obtained by, for example, adding or subtracting a frequency set in advance to or from the frequency shift amount recorded in the register 41.

The frequency shift unit 61 causes the register 41 to record the changed frequency shift amount.

The frequency shift unit 61 outputs the interference light data after frequency shift to the band limitation unit 62.

The band limitation unit 62 acquires the interference light data after the frequency shift from the frequency shift unit 61.

The band limitation unit 62 limits a frequency band of the interference light data after the frequency shift (step ST2 in FIG. 7).

The band limitation unit 62 outputs the interference light data after frequency band limitation to the signal conversion unit 63.

The signal conversion unit 63 acquires the interference light data after the frequency band limitation from the band limitation unit 62.

The signal conversion unit 63 converts the interference light data into the frequency domain signal by, for example, performing FFT on the interference light data after the frequency band limitation (step ST3 in FIG. 7).

The signal conversion unit 63 outputs the frequency domain signal to the shift amount change unit 64.

The shift amount change unit 64 acquires the frequency domain signal from the signal conversion unit 63.

The shift amount change unit 64 determines whether or not the frequency domain signal includes a peak signal that is a signal whose signal strength is the threshold or more.

In a case where the frequency domain signal does not include the peak signal (step ST4 in FIG. 7: a case of NO), the shift amount change unit 64 further changes the frequency shift amount of the frequency shift unit 61 by outputting the change command of the frequency shift amount to the frequency shift unit 61 (step ST7 in FIG. 7).

When receiving the change command of the frequency shift amount from the shift amount change unit 64, the frequency shift unit 61 further changes the frequency shift amount, and shifts the frequency of the interference light data by the changed frequency shift amount (step ST8 in FIG. 7).

The frequency shift unit 61 causes the register 41 to record the changed frequency shift amount.

The frequency shift unit 61 outputs the interference light data after frequency shift to the band limitation unit 62.

The processing in steps ST2 to ST4, ST7, and ST8 is repeated until the frequency domain signal includes the peak signal.

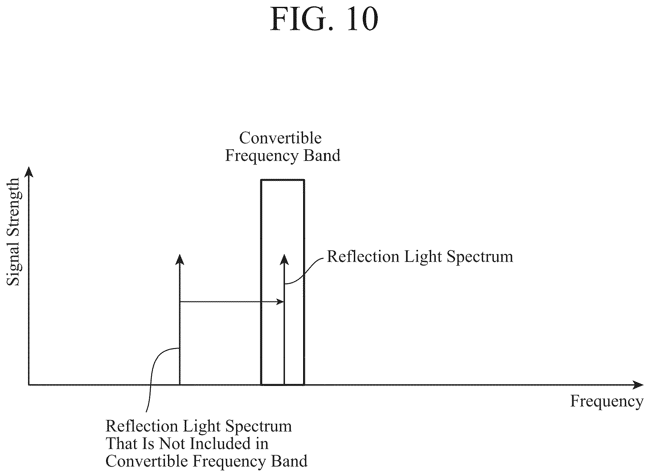

As illustrated in FIG. 10, when the frequency domain signal includes the peak signal, instead of the reference workpiece, the target workpiece 3 is placed on the table 1.

FIG. 10 is an explanatory view illustrating that the frequency shift amount is changed and, as a result, the reflection light spectrum is included in the convertible frequency band.

In FIG. 10, the horizontal axis indicates a frequency, and the vertical axis indicates a signal strength.

After the target workpiece 3 is placed on the table 1, the machine tool device calculates the shape of the target workpiece 3 by the same method as that adopted when the optical fiber that implements the light transmission unit 23 is not disconnected. In this regard, the frequency shift amount used by the frequency shift unit 61 is a frequency shift amount at a time when the frequency domain signal includes the peak signal.

Here, when the optical fiber that implements the light transmission unit 23 is disconnected and is replaced with another optical fiber, instead of the target workpiece 3, the reference workpiece is placed on the table 1, and, then, if the frequency domain signal includes the peak signal, instead of the reference workpiece, the target workpiece 3 is placed on the table 1. However, this is merely an example, and, even when the optical fiber is disconnected and is replaced with another optical fiber, the processing in steps ST1 to ST8 in FIG. 7 may be performed in a state where the target workpiece 3 is placed on the table 1.

According to above Embodiment 1, the distance measurement device 42 includes: the frequency shift unit 61 that shifts the frequency of interference light of light radiated from the sensor head unit 21 to the machining surface 3a of the target workpiece 3, and light received by the sensor head unit 21 and reflected by the machining surface 3a; the band limitation unit 62 that limits a frequency band of the interference light having the frequency shifted by the frequency shift unit 61; and the signal conversion unit 63 that converts the interference light having the frequency band limited by the band limitation unit 62 into a frequency domain signal. Furthermore, the distance measurement device 42 includes: the shift amount change unit 64 that, when the frequency domain signal converted by the signal conversion unit 63 does not include a signal whose signal strength is the threshold or more, changes a shift amount of the frequency of the interference light shifted by the frequency shift unit 61; and the distance calculation unit 65 that, when the frequency domain signal converted by the signal conversion unit 63 includes the signal whose signal strength is the threshold or more, calculates a distance from the sensor head unit 21 to the machining surface 3a on the basis of the signal whose signal strength is the threshold or more. Consequently, even when a situation occurs that the frequency of a frequency domain signal falls outside the convertible frequency range, the distance measurement device 42 can calculate the distance from the sensor head unit 21 to the machining surface 3a of the target workpiece 3.

In the distance measurement device 42 illustrated in FIG. 1, when acquiring the interference light data from the A/D converter 39, the frequency shift unit 61 shifts the frequency of the interference light data by the frequency shift amount. When acquiring the interference light data from the A/D converter 39 before shifting the frequency of the interference light data, the frequency shift unit 61 may perform non-linear compensation of the frequency-swept light source 31a on the interference light data on the basis of trigger data or amplitude data output from the A/D converter 40. Since compensation processing of non-linear compensation is a known technique, detailed description thereof will be omitted.

Furthermore, the frequency shift unit 61 may perform down-sampling processing on the interference light data by, for example, thinning a signal by decimation. Since the down-sampling processing is a known technique, detailed description thereof will be omitted.

Embodiment 2.

In Embodiment 2, a distance measurement device 42 that includes a distance calculation unit 67 that calculates a distance from the sensor head unit 21 to the machining surface 3a to which oil adheres will be described.

The configuration of a machine tool device other than the distance measurement device 42 is the same as that of the machine tool device illustrated in FIG. 1.

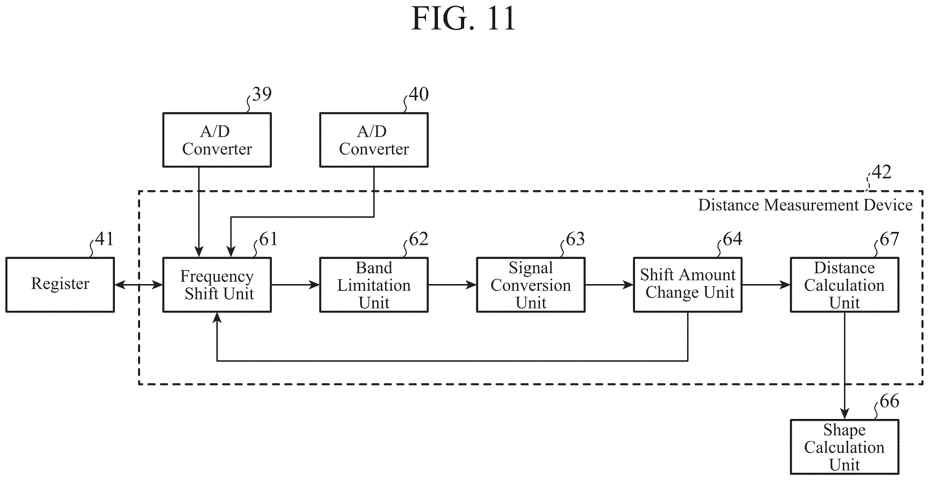

FIG. 11 is a configuration diagram illustrating the distance measurement device 42 according to Embodiment 2. Note that, in FIG. 11, the same reference numerals as those in FIG. 4 indicate identical or corresponding parts, and therefore detailed description thereof will be omitted.

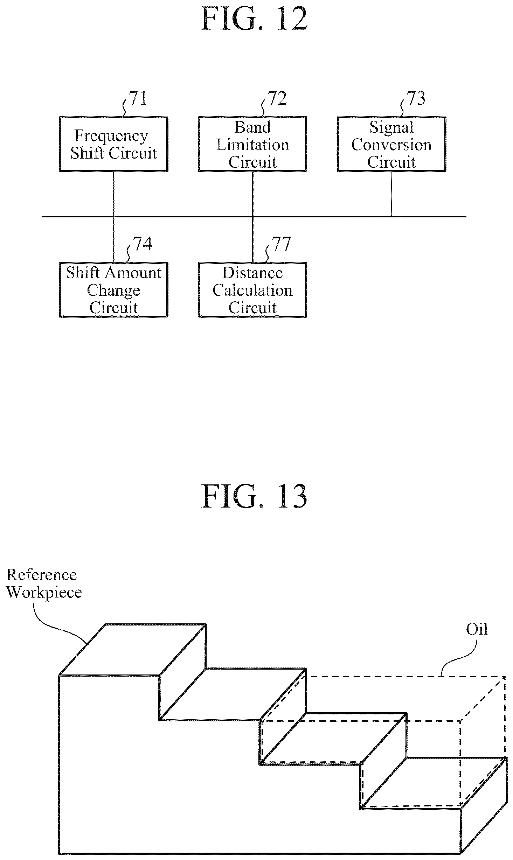

FIG. 12 is a hardware configuration diagram illustrating hardware of the distance measurement device 42 according to Embodiment 2. Note that, in FIG. 12, the same reference numerals as those in FIG. 5 indicate identical or corresponding parts, and therefore detailed description thereof will be omitted.

The distance measurement device 42 includes the frequency shift unit 61, the band limitation unit 62, the signal conversion unit 63, the shift amount change unit 64, and the distance calculation unit 67.

The distance calculation unit 67 is implemented by, for example, a distance calculation circuit 77 illustrated in FIG. 12.

When a frequency domain signal includes a peak signal, and therefore the peak signal is output from the shift amount change unit 64, the distance calculation unit 67 calculates the distance from the sensor head unit 21 to the machining surface 3a on the basis of the peak signal similarly to the distance calculation unit 65 illustrated in FIG. 4.

When oil adheres to the machining surface 3a and the frequency domain signal converted by the signal conversion unit 63 includes two peak signals, the distance calculation unit 67 calculates a film thickness of the oil adhered to the machining surface 3a and a distance from the sensor head unit 21 to an oil surface on the basis of the two peak signals.

The distance calculation unit 67 calculates the distance from the sensor head unit 21 to the machining surface 3a on the basis of the film thickness and the distance to the oil surface.

The distance calculation unit 67 outputs the calculated distance to the shape calculation unit 66.

In FIG. 11, it is assumed that each of the frequency shift unit 61, the band limitation unit 62, the signal conversion unit 63, the shift amount change unit 64, and the distance calculation unit 67 that are the components of the distance measurement device 42 is implemented by dedicated hardware illustrated in FIG. 12. That is, in FIG. 11, it is assumed that the distance measurement device 42 is implemented by the frequency shift circuit 71, the band limitation circuit 72, the signal conversion circuit 73, the shift amount change circuit 74, and the distance calculation circuit 77.

Each of the frequency shift circuit 71, the band limitation circuit 72, the signal conversion circuit 73, the shift amount change circuit 74, and the distance calculation circuit 77 corresponds to, for example, a single circuit, a composite circuit, a programmed processor, a parallel-programmed processor, an ASIC, an FPGA, or a combination thereof.

The components of the distance measurement device 42 are not limited to components that are implemented by the dedicated hardware, and the distance measurement device 42 may be implemented by software, firmware, or a combination of software and firmware.

In the case where the distance measurement device 42 is implemented by the software, the firmware, or the like, programs for causing the computer to execute processing procedures in the frequency shift unit 61, the band limitation unit 62, the signal conversion unit 63, the shift amount change unit 64, and the distance calculation unit 67 are stored in a memory 81 illustrated in FIG. 6. Furthermore, the processor 82 illustrated in FIG. 6 executes the programs stored in the memory 81.

Furthermore, FIG. 12 illustrates an example where each of the components of the distance measurement device 42 is implemented by dedicated hardware, and FIG. 6 illustrates an example where the distance measurement device 42 is implemented by the software, the firmware, or the like. However, this is merely an example, and part of the components of the distance measurement device 42 may be implemented by the dedicated hardware, and the rest of the components may be implemented by the software, the firmware, or the like.

Next, the operation of the distance measurement device 42 illustrated in FIG. 11 will be described. The configuration of the distance measurement device 42 other than the distance calculation unit 67 is the same as that of the distance measurement device 42 illustrated in FIG. 4. Hence, only an operation of the distance calculation unit 67 will be described hereinafter.

The distance calculation unit 67 acquires a peak signal from the shift amount change unit 64.

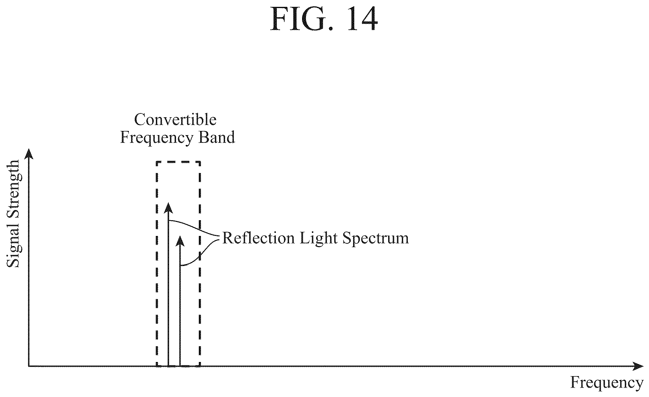

When, for example, oil adheres to the machining surface 3a as illustrated in FIG. 13, two peak signals may be output from the shift amount change unit 64 as illustrated in FIG. 14. The machining surface 3a is a surface of the reference workpiece or the machining surface of the target workpiece 3.

FIG. 13 is an explanatory view illustrating an example of the reference workpiece having a machining surface 3a to which oil adheres.

FIG. 14 is an explanatory view illustrating two peak signals output from the shift amount change unit 64.

In FIG. 14, the horizontal axis indicates a frequency, and the vertical axis indicates a signal strength.

The one peak signal of the two peak signals is a reflection light spectrum reflected by the oil surface. The other peak signal of the two peak signals is a reflection light spectrum having transmitted through the oil surface and been reflected by the machining surface 3a.

The oil adhered to the machining surface 3a is a cutting oil supplied from the cutting oil nozzle 14.

The distance calculation unit 67 calculates a distance Li from the sensor head unit 21 to the oil surface on the basis of the one peak signal. Processing of calculating the distance Li to the oil surface on the basis of the peak signal is a known technique, detailed description thereof will be omitted.

Furthermore, the distance calculation unit 67 calculates a distance $L_2$ from the sensor head unit 21 to the machining surface 3a on the basis of the other peak signal. In this regard, the speed of light transmitting through the oil changes depending on the refractive index of the oil, and therefore the distance $L_2$ calculated on the basis of the other peak signal may include an error.

As expressed in the following equation (1), when the refractive index of the light in vacuum is "1", a speed v of the light is lower as a refractive index n of the oil is higher, and the speed v of the light is higher as the refractive index of the oil is lower.

$$n = c/v \ldots (1)$$

In the equation (1), c represents the speed of the light in vacuum. Note that a speed c' of the light in the air is 1.000292 at zero degrees Celsius and at one atmosphere. A relationship between the speed c' of the light in the air and the speed v of the light transmitting through the oil is expressed by the following equation (2).

$$n = c'/v \ldots (2)$$

The distance calculation unit 67 calculates the refractive index n of the oil as expressed in the following equation (3) to compensate for the distance $L_2$.

$$n = \{((FFT_{12}-FFT_{11})-(FFT_{02}-FFT_{01}))\times L_{bin}\}/(d_1-d_0) \ldots (3)$$

In the equation (3), $d_0$ and $d_1$ each represent a distance of a position whose distance to the machining surface 3a is known among a plurality of positions of the machining surface 3a. A position of the distance $d_0$ and a position of the distance $d_1$ are respectively different positions.

$FFT_{01}$ represents a number of FFTBin that is a frequency axis indicating the peak signal from the machining surface 3a at a position of the distance $d_0$, and $FFT_{01}$ represents a number of FFTBin from the oil surface at a position of the distance $d_0$.

$FFT_{11}$ represents a number of FFTBin from the machining surface 3a at the position of the distance di, and $FFT_{12}$ represents a number of FFTBin from the oil surface at the position of the distance $d_1$.

$L_{bin}$ represents FFTBin, and is determined depending on, for example, an FFT size.

The distance calculation unit 67 calculates the speed v of the light transmitting through the oil by substituting the refractive index n of the oil in the equation (2).

Furthermore, the distance calculation unit 67 calculates a film thickness W of the oil on the basis of the speed v of the light transmitting through the oil. The film thickness W can be calculated on the basis of, for example, a time difference between a time at which the light has been radiated from the sensor head unit 21 and a time at which reflection light has been received by the sensor head unit 21, and the speed v.

The distance calculation unit 67 calculates a distance $L_2'$ after compensation using the distance Li to the oil surface and the film thickness W of the oil as expressed in the following equation (4).

$$L_2' = L_1+W \ldots (4)$$

According to above Embodiment 2, the distance measurement device 42 is configured in such a way that, when oil adheres to the machining surface 3a, and therefore the frequency domain signal converted by the signal conversion unit 63 includes two signals whose signal strengths are the threshold or more, the distance calculation unit 67 calculates a film thickness of the oil adhered to the machining surface 3a and a distance from the sensor head unit 21 to the oil surface on the basis of the two signals whose signal strengths are the threshold or more, and calculates the distance from the sensor head unit 21 to the machining surface 3a on the basis of the film thickness and the distance to the oil surface. Consequently, even when a situation occurs that, when the oil adheres to the machining surface 3a, the frequency of a frequency domain signal falls outside the convertible frequency range, the distance measurement device 42 can calculate the distance from the sensor head unit 21 to the machining surface 3a of the target workpiece 3.

Note that the present disclosure enables free combinations of the embodiments, modification of arbitrary components in the embodiments, or omission of arbitrary components in the embodiments.

INDUSTRIAL APPLICABILITY

The present disclosure is suitable to the distance measurement device, the distance measurement method, and the machine tool device.

REFERENCE SIGNS LIST

1: table, 2: vise, 3: target workpiece, 3a: machining surface, 10: machining unit, 11: machining head, 11a: head main body unit, 11b: spindle, 11c: outer circumferential surface, 12: machining unit, 13: head driving unit, 14: cutting oil

## EP 4 707 723 A1

nozzle, 20: sensor unit, 21: sensor head unit, 22: sensor main body unit, 23: light transmission unit, 31: frequency-swept light output unit, 31a: frequency-swept light source, 32: light split unit, 33: optical coupler, 34: circulator, 35: condensing optical element, 36: light interference unit, 37: optical interferometer, 38: photodetector, 39, 40: A/D converter, 41: register, 42: distance measurement device, 50: control unit, 61: frequency shift unit, 62: band limitation unit, 63: signal conversion unit, 64: shift amount change unit, 65: distance calculation unit, 66: shape calculation unit, 67: distance calculation unit, 71: frequency shift circuit, 72: band limitation circuit, 73: signal conversion circuit, 74: shift amount change circuit, 75: distance calculation circuit, 77: distance calculation circuit, 81: memory, 82: processor

## Claims

1. A distance measurement device comprising:

   a frequency shift unit to shift a frequency of interference light of light radiated from a sensor head unit to a machining surface of a target workpiece, and light received by the sensor head unit and reflected by the machining surface;
   a band limitation unit to limit a frequency band of the interference light having the frequency shifted by the frequency shift unit;
   a signal conversion unit to convert the interference light having the frequency band limited by the band limitation unit into a frequency domain signal;
   a shift amount change unit to, when the frequency domain signal converted by the signal conversion unit does not include a signal whose signal strength is a threshold or more, change a shift amount of the frequency of the interference light by the frequency shift amount change unit; and
   a distance calculation unit to, when the frequency domain signal converted by the signal conversion unit includes the signal whose signal strength is the threshold or more, calculate a distance from the sensor head unit to the machining surface on a basis of the signal whose signal strength is the threshold or more.

2. The distance measurement device according to claim 1, wherein

   the sensor head unit radiates the light to a surface of a reference workpiece that is the machining surface of the target workpiece and has a desired shape obtained after machining the target workpiece,
   the frequency shift unit shifts the frequency of the interference light of the light radiated to the surface of the reference workpiece and light reflected by the surface of the reference workpiece, and
   the distance calculation unit calculates a distance from the sensor head unit to the surface of the reference workpiece as the distance from the sensor head unit to the machining surface.

3. The distance measurement device according to claim 1, wherein, when oil adheres to the machining surface received by the sensor head unit, and the frequency domain signal converted by the signal conversion unit includes two signals whose signal strengths are the threshold or more, the distance calculation unit calculates a film thickness of the oil adhered to the machining surface and a distance from the sensor head unit to an oil surface on a basis of the two signals whose signal strengths are the threshold or more, and calculates the distance from the sensor head unit to the machining surface on a basis of the film thickness and the distance to the oil surface.

4. A distance measurement method comprising:

   shifting, by a frequency shift unit, a frequency of interference light of light radiated from a sensor head unit to a machining surface of a target workpiece, and light received by the sensor head unit and reflected by the machining surface;
   limiting, by a band limitation unit, a frequency band of the interference light having the frequency shifted by the frequency shift unit;
   converting, by a signal conversion unit, the interference light having the frequency band limited by the band limitation unit into a frequency domain signal;
   changing, by a shift amount change unit, a shift amount of the frequency of the interference light by the frequency shift amount change unit when the frequency domain signal converted by the signal conversion unit does not include a signal whose signal strength is a threshold or more; and
   calculating, by a distance calculation unit, a distance from the sensor head unit to the machining surface or more on a basis of the signal whose signal strength is the threshold or more when the frequency domain signal converted by the signal conversion unit includes the signal whose signal strength is the threshold.

5. A machine tool device comprising:

a sensor head unit to radiate light to a machining surface of a target workpiece, and receive light reflected by the machining surface;

a light interference unit to detect interference light of the light radiated from the sensor head unit and the light received by the sensor head unit;

a frequency shift unit to shift a frequency of the interference light detected by the light interference unit;

a band limitation unit to limit a frequency band of the interference light having the frequency shifted by the frequency shift unit;

a signal conversion unit to convert the interference light having the frequency band limited by the band limitation unit into a frequency domain signal;

a shift amount change unit to, when the frequency domain signal converted by the signal conversion unit does not include a signal whose signal strength is a threshold or more, change a shift amount of the frequency of the interference light by the frequency shift amount change unit; and

a distance calculation unit to, when the frequency domain signal converted by the signal conversion unit includes the signal whose signal strength is the threshold or more, calculate a distance from the sensor head unit to the machining surface on a basis of the signal whose signal strength is the threshold or more.

6. The machine tool device according to claim 5, wherein

the distance calculation unit calculates the distance from the sensor head unit to the machining surface every time a position of the sensor head unit is moved, and

includes a shape calculation unit to calculate a shape of the target workpiece on a basis of a plurality of distances calculated by the distance calculation unit.

# FIG. 1

FIG. 2

Sensor Unit 20

Sensor Head Unit 21

Condensing Optical Element 35

Reflection Light
Irradiation Light
3a
3

23

Head Driving Unit 13

Sensor Main Body Unit 22

Light Split Unit 32

34

Reflection Light

Irradiation Light 33

Reference Light

Photodetector 37

Light Interference Unit 36

Optical Interferometer 38

Frequency-Swept Light Output Unit 31
31a

A/D Converter 40

A/D Converter 39

Register 41

Distance Measurement Device 42

Shape Calculation Unit 66

# FIG. 3

Interference Light (Frequency Difference)

$f_{max}$

Reference Light

Reflection Light

Frequency

$f_{min}$

Time

Time Waveform of Frequency-Swept Light

# FIG. 4

Distance Measurement Device (42)

Register (41)

A/D Converter (39) → Frequency Shift Unit (61)

A/D Converter (40) → Frequency Shift Unit (61)

Frequency Shift Unit (61) → Band Limitation Unit (62) → Signal Conversion Unit (63) → Shift Amount Change Unit (64) → Distance Calculation Unit (65) → Shape Calculation Unit (66)

# FIG. 5

| 71 | 72 | 73 |
|---|---|---|
| Frequency Shift Circuit | Band Limitation Circuit | Signal Conversion Circuit |

| 74 | 75 |
|---|---|
| Shift Amount Change Circuit | Distance Calculation Circuit |

# FIG. 6

| 81 | 82 |
|---|---|
| Memory | Processor |

# FIG. 7

START

ST1
Frequency Shift Unit
Shifts Frequency of
Interference Light Data by
Frequency Shift Amount

ST2
Band Limitation Unit
Limits Frequency Band of
Interference Light Data

ST3
Signal Conversion Unit
Converts Interference Light Data into
Frequency Domain Signal

ST4
Is Peak Signal Included?

NO

YES

ST5
Distance Calculation Unit
Calculates Distance on
Basis of Peak Signal

ST7
Shift Amount Change Unit
Outputs Change Command of
Frequency Shift Amount to
Frequency Shift Unit

ST6
Has Position Been Changed?

YES

NO

END

ST8
Frequency Shift Unit
Shifts Frequency of
Interference Light Data by
Changed Frequency Shift Amount

# FIG. 8

Convertible
Frequency Band

Signal Strength

Reflection Light Spectrum

Threshold

Frequency

# FIG. 9

Reference
Workpiece

FIG. 10

# FIG. 11

Distance Measurement Device (42)

A/D Converter (39) → Frequency Shift Unit (61)

A/D Converter (40) → Frequency Shift Unit (61)

Register (41) ↔ Frequency Shift Unit (61) → Band Limitation Unit (62) → Signal Conversion Unit (63) → Shift Amount Change Unit (64) → Distance Calculation Unit (67)

Distance Calculation Unit (67) → Shape Calculation Unit (66)

EP 4 707 723 A1

# FIG. 12

| | | |
|---|---|---|
| 71 | 72 | 73 |
| Frequency Shift Circuit | Band Limitation Circuit | Signal Conversion Circuit |

| | |
|---|---|
| 74 | 77 |
| Shift Amount Change Circuit | Distance Calculation Circuit |

# FIG. 13

Reference Workpiece

Oil

# FIG. 14

# INTERNATIONAL SEARCH REPORT

| International application No. |
|---|
| **PCT/JP2023/021991** |

| | | |
|---|---|---|
| **A.** | **CLASSIFICATION OF SUBJECT MATTER** | |

*G01B 11/24*(2006.01)i; *G01B 9/02004*(2022.01)i; *G01B 9/02055*(2022.01)i
FI:     G01B11/24 D; G01B11/24 A; G01B9/02004; G01B9/02055

According to International Patent Classification (IPC) or to both national classification and IPC

| | |
|---|---|
| **B.** | **FIELDS SEARCHED** |

Minimum documentation searched (classification system followed by classification symbols)

G01B9/00-9/10;G01B11/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | US 2006/0061770 A1 (THE REGENTS OF THE UNIVERSITY OF CALIFORNIA) 23 March 2006 (2006-03-23)<br>paragraphs [0007]-[0012], [0118], [0122], [0124]-[0132], [0136], [0161], [0181], [0185], [0197], fig. 16-20 | 1-6 |
| A | JP 2020-20612 A (RICOH COMPANY, LTD.) 06 February 2020 (2020-02-06)<br>entire text, all drawings | 1-6 |
| A | JP 2021-101192 A (KYOCERA CORPORATION) 08 July 2021 (2021-07-08)<br>entire text, all drawings | 1-6 |

| | | | |
|---|---|---|---|
| ☐ Further documents are listed in the continuation of Box C. | | ☑ See patent family annex. | |

| | |
|---|---|
| \* Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/021991**

| Patent document cited in search report | | | Publication date (day/month/year) | Patent family member(s) | Publication date (day/month/year) |
|---|---|---|---|---|---|
| US | 2006/0061770 | A1 | 23 March 2006 | (Family: none) | |
| JP | 2020-20612 | A | 06 February 2020 | (Family: none) | |
| JP | 2021-101192 | A | 08 July 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020070884 A